# EUROPEAN PATENT APPLICATION

(11) **EP 2 369 829 A2**
(43) Date of publication of application: **28.09.2011**
(21) Application number: 11158641.8
(22) Date of filing: 17.03.2011
(51) Int. Cl.: H04N 1/00, G06F 3/14, G11B 27/00, H04N 1/387, G06T 1/00

(54) **Method for Reproducing Contents using Information Received Through Network and Display Apparatus Using the Same**

(30) Priority: 23.03.2010 KR 20100025687
(71) Applicant: SAMSUNG ELECTRONICS CO., LTD., Suwon-si Gyeonggi-do 442-742 (KR)
(72) Inventor: Seong Hye-young, Gyeonggi-do (KR); Kim, Yoo-tai, Gyeonggi-do (KR); Lee, Dong-heon, Seoul (KR); Kim, Jung-a, Gyeonggi-do (KR)
(74) Representative: Brandon, Paul Laurence

(57) **Abstract**

A method for reproducing contents using information received over a network and a display apparatus using the same are provided. The method for reproducing contents includes receiving specific information over a network, and displaying contents to which an image effect corresponding to the received specific information is applied. As an image effect is applied according to information which is received over a network, a user may visually recognize the received information through the image effect.

## Description

### CROSS-REFERENCE TO RELATED APPLICATIONS

This application claims priority from Korean Patent Application No. 10-2010-0025687 filed on March 23, 2010 in the Korean Intellectual Property Office, the disclosure of which is incorporated herein by reference in its entirety.

### BACKGROUND

### 1. Field of the Exemplary Embodiments

Apparatuses and methods consistent with the exemplary embodiments relate to a method for reproducing contents using network information and a display apparatus using the same, and more particularly, to a method for reproducing contents so that image contents stored in an external memory or an internal memory are displayed on a screen in a slideshow format using network information and a display apparatus using the same.

### 2. Description of the Related Art

With the recent development of various digital image technologies, still images or motion pictures can be obtained using various digital apparatus, for example, a digital camera, a camcorder, and a cellular phone, which generates digital image contents.

Image contents generated by a digital apparatus may be printed on photo paper or another type of paper, just like a common image which is generated by developing a film, or the image contents may be stored in a storage medium and then displayed on a digital photo frame.

A digital photo frame displays digital image contents on a screen without the need to print them or use a computer. A user may edit the image using an editing program for image contents provided by the digital photo frame. The image contents may be stored in an internal memory or an external memory.

More images may be stored in a digital photo frame than in an album. In particular, a digital photo frame may store image contents in a compact disk (CD). Therefore, the digital photo frame is easy to carry and it saves space.

In addition, the digital photo frame may apply an effect to image content while the image content is reproduced as a slideshow, thereby displaying the image content on the digital photo frame more attractively than on a usual frame.

However, according to a digital photo frame in the related art, such an effect is preset on a computer or a user needs to manipulate the digital photo frame in detail to add the effect to the image content. That is, it is difficult for a user to change an image effect of a digital photo frame, and the user experiences inconvenience in manipulating the digital photo frame accurately.

### SUMMARY

Exemplary embodiments of the general inventive concept address at least the above problems and/or disadvantages and other disadvantages not described above. Also, the present general inventive concept is not required to overcome the disadvantages described above, and an exemplary embodiment of the present general inventive concept may not overcome any of the problems described above.

The present general inventive concept provides a method for reproducing contents in which specific information is received over a network and an image effect corresponding to the received specific information is displayed on a screen on which the contents are reproduced and a display apparatus using the same.

According to an exemplary aspect of the present general inventive concept, there is provided a method for reproducing contents of a display apparatus, the method including receiving specific information over a network; and displaying contents to which an image effect corresponding to the received specific information is applied.

The displaying may include displaying the contents with a screen conversion effect corresponding to the specific information while a first screen is converted into a second screen while the contents are reproduced.

The specific information may include weather forecast information; and the displaying may include displaying the contents with the screen conversion effect corresponding to the received weather forecast information when the first screen is converted into the second screen while the contents are reproduced.

The specific information may include stock information; and the displaying may include displaying the contents such that if a specific stock price rises, the first screen is converted into the second screen by moving the first and second screens upward until the first screen is no longer displayed and the second screen is fully displayed, and if a specific stock price falls, the first screen is converted into the second screen by moving the first and second screens downward until the first screen is no longer displayed and the second screen is fully displayed.

The method may further include generating a graphical user interface (GUI) which corresponds to the received specific information; and displaying the generated GUI along with the contents on a screen on which the contents are reproduced.

The method may further include displaying, if the generated GUI is selected by a user manipulation, the specific information which is received over the network.

The displaying may include displaying the contents with the image effect corresponding to the received information such that the image effect is displayed around an edge of a screen on which the contents are reproduced.

The display apparatus may include a digital photo frame.

According to another exemplary aspect of the present invention, there is provided a display apparatus, including a communication unit which receives specific information over a network; and a controller which controls contents to be displayed with an image effect corresponding to the received specific information to a screen on which the contents are reproduced.

The controller may control the contents to be displayed with a screen conversion effect corresponding to the specific information while a first screen is converted into a second screen while the contents are reproduced.

The specific information may include weather forecast information; and the controller may control the contents to be displayed with the screen conversion effect corresponding to the received weather forecast information when the first screen is converted into the second screen while the contents are reproduced.

The specific information may include stock information; and the controller may control the contents to be displayed such that if a specific stock price rises, the first screen is converted into the second screen by moving the first and second screens upward until the first screen is no longer displayed and the second screen is fully displayed, and if a specific stock price falls, the first screen is converted into the second screen by moving the first and second screens downward until the first screen is no longer displayed and the second screen is fully displayed.

The display apparatus may further include a GUI generator which generates a graphical user interface (GUI) corresponding to the received specific information; wherein the controller may control the generated GUI to be displayed along with the contents on a screen on which the contents are reproduced.

If the generated GUI is selected by a user manipulation, the controller may control the specific information which is received over the network to be displayed.

The controller may control the contents to be displayed with the image effect corresponding to the received information such that the image effect is displayed around an edge of a screen on which the contents are reproduced.

The display apparatus may include a digital photo frame.

### BRIEF DESCRIPTION OF THE DRAWINGS

The above and/or other aspects of the present general inventive concept will be more apparent by describing certain exemplary embodiments of the present general inventive concept with reference to the accompanying drawings, in which:

FIG. 1 is a block diagram illustrating a digital photo frame, according to an exemplary embodiment;

FIGS. 2A to 2C are views provided to explain a screen conversion effect in accordance with the received weather forecast information, according to an exemplary embodiment;

FIGS. 3A to 3C are views provided to explain a screen conversion effect in accordance with the received weather forecast information, according to another exemplary embodiment;

FIGS. 4A to 4B are views provided to explain a method for displaying an image effect corresponding the received weather forecast information around an edge of a screen on which contents are being reproduced, according to an exemplary embodiment;

FIGS. 5A to 5C are views provided to explain a method for displaying a GUI on a screen on which contents are being reproduced, according to an exemplary embodiment;

FIGS. 6A to 6C are views provided to explain a screen conversion effect in accordance with the received stock information, according to an exemplary embodiment;

FIG. 7 is a flowchart illustrating a method for reproducing contents in which a screen conversion effect is displayed corresponding to the received weather forecast information, according to an exemplary embodiment; and

FIG. 8 is a flowchart provided to explain a method for reproducing contents in which a GUI corresponding to the received weather forecast information is generated and displayed, according to an exemplary embodiment.

### DETAILED DESCRIPTION OF EXEMPLARY

Certain exemplary embodiments of the present general inventive concept will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the general inventive concept. Thus, it is apparent that the present general inventive concept can be carried out without those specifically defined matters. Also, well-known functions or constructions are not described in detail since they would obscure the general inventive concept with unnecessary detail.

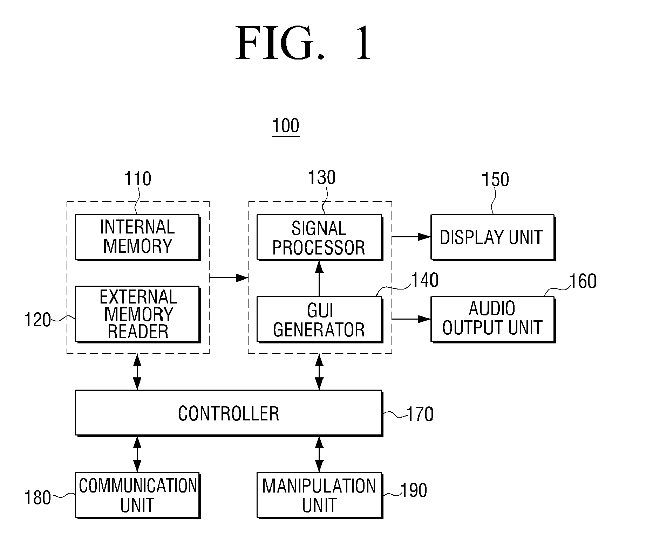

FIG. 1 is a block diagram illustrating a digital photo frame 100, according to an exemplary embodiment. Referring to FIG. 1, the digital photo frame 100 includes an internal memory 110, an external memory reader 120, a signal processor 130, a graphical user interface (GUI) generator 140, a display unit 150, an audio output unit 160, a controller 170, a communication unit 180, and a manipulation unit 190.

The internal memory 110 may include a program memory in which information on programs used to control the digital photo frame 100 is stored and a data memory in which contents, image effects, menu information, and icon information are stored. The internal memory 110 may be implemented using a read only memory (ROM), a flash memory, and a random access memory (RAM). The contents may include image contents and sound contents.

The external memory reader 120 reads out data such as an image file and a sound file from an external memory card (not shown) which is mountable on the digital photo frame 100. Then, the external memory reader 120 stores the read data in the internal memory 110 or transmits the read data to the controller 180. The external memory card may be a compact flash card (CF), a multi media card (MMC), a secure digital card (SD), a smart media card (SMC), a memory stick (MS), a xD picture card (XD), a mini SD card, a T-flash card, a RS-MMC card, and so on.

The signal processor 130 decodes data which is stored in the internal memory 110, data which is stored in an external memory mounted on the external memory reader 120 or data which is transmitted from the communication unit 180. The communication unit 180 will be explained later. In more detail, the signal processor 130 performs signal processing on image data and sound data in a manner of decompressing or reproducing, and converts the input data into a signal which is capable of being output.

In the case of the audio signal, the signal processor 130 converts a digital audio signal into an analogue audio signal, and then outputs the converted audio signal to the audio output unit 160 (which will be explained later). In the case of the image signal, the signal processor 130 performs scaling and splitting on the decoded image, and then outputs the processed image to the display unit 150 (which will be explained later) so that an image is displayed in a desired format.

The GUI generator 140 generates a GUI which is displayed together with the image signal processed by the signal processor 130.

The GUI generator 140 may generate a GUI to correspond to specific information received over a network. For example, if the specific information which is received over a network is the weather forecast information, and the weather forecast information predicts snow, the GUI generator 140 may generate a snowman icon together with the image. If the weather forecast information predicting rain is received over a network, the GUI generator 140 may generate an umbrella icon together with the image. Alternatively, if specific information which is received over a network is information regarding stocks, the GUI generator 140 may generate a GUI which shows stock information on a lower part of the display unit 150.

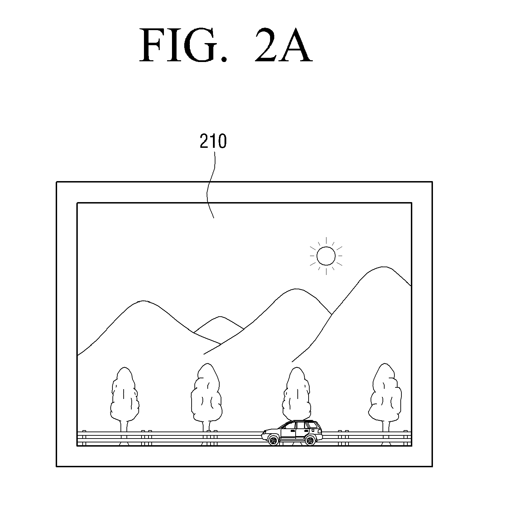

The display unit 150 may display the image output from the signal processor 130 on a screen. The image displayed on the display unit 150 may be displayed in various formats as shown in FIGS. 2A to 6C.

The audio output unit 160 outputs the audio signal processed by the signal processor 130 via a speaker.

The communication unit 180 receives an image file and a sound file from an external device and transmits the received files to the internal memory 110 or the controller 170 by communicating with the external device. The external device may be a camcorder, a personal computer (PC), a digital camera, and so on.

The communication unit 180 receives specific information over a wired or wireless network, and transmits the specific information to the controller 170. The specific information may include weather forecast information, stock information, sport information, news information, information provided by a particular website, such as web feed information (e.g., Really Simple Syndication (RSS) feeds), and so on.

The manipulation unit 190 receives a command from a user and then transmits the command to the controller 180 which will be explained later. The manipulation unit 190 may be implemented using a mouse, a pointing device, a touch panel, and so on.

The controller 170 controls overall operations of the digital photo frame 100. In particular, if a user command is input through the manipulation unit 190, the controller 180 may control various operations of the digital photo frame 100 according to the user command.

The controller 170 includes at least one processor and controls contents which are stored in the internal memory 110 or an external memory mounted on the external memory reader 120 to be reproduced. Herein, reproducing contents means performing a slideshow of the contents. That is, the controller 170 controls the stored image contents to be displayed one by one in a predetermined time interval.

If specific information is received through the communication unit 180, the controller 170 may control the display unit 150 to display an image effect corresponding to the received specific information. Herein, the image effect means adding another image to the contents which are being reproduced. For example, the image effect could add an image to overlap the contents which are being displayed.

Specifically, the controller 170 may control the display unit 150 to display the contents with a screen conversion effect corresponding to the received specific information while a first screen is converted into a second screen. That is, the received specific information is displayed while during the conversion from the first screen to the second screen. This screen conversion effect may be provided only at the time of converting the first image to the second image in a slideshow sequence.

For example, if the received information is information regarding weather forecast, the controller 170 may control the display unit 150 to display a screen conversion effect corresponding to the weather forecast information. For example, if the weather forecast information predicting rain is received, the controller 170 may control the display unit 150 to display a screen conversion effect in which water drops are displayed while a first screen is converted into a second screen. Alternatively, if the weather forecast information predicting snow is received, the controller 170 may control the display unit 150 to display a screen conversion effect in which snowballs are displayed while a first screen is converted into a second screen.

The controller 170 may control the GUI generator 140 to generate a GUI corresponding to the received specific information. In addition, the controller 170 may control the display unit 150 to display the generated GUI together with a processed image. For example, if specific information which is received over a network is the information regarding weather forecast, and the weather forecast information predicts snow, the controller 170 may control the GUI generator 140 to generate and display a snowman icon. If the weather forecast information predicting rain is received over a network, the controller 170 may control the GUI generator 140 to generate and display an umbrella icon. Alternatively, if specific information regarding stocks is received over a network, the controller 170 may control the GUI generator 140 to generate and display a GUI regarding stock information on a lower part of the display unit 150.

If the above GUI is selected through the manipulation unit 190, the controller 170 may control information regarding the selected GUI to be displayed. For example, if a snowman-GUI which is generated through the above process is selected, the controller 170 may control the display unit 150 to display the amount of snowfall for each city and time. Each city may be in a predetermined proximity of a location of the digital photo frame 100. If an umbrella-GUI is selected, the controller 170 may control the display unit 150 to display the amount of rainfall for each city and time. Alternatively, if a GUI regarding stock information is selected, the controller 170 may control the display unit 150 to display the composite stock price index, the price index of hot stocks, and so on.

The controller 170 may control the display unit 150 to display the image effect corresponding to the received specific information around an edge of a screen on which the image contents are reproduced. For example, if the weather forecast information predicting rain is received over a network, the controller 170 may control the display unit 150 to display a snow image effect around the edge of the screen. As described above, if the image effect is applied only to the edge of the screen, the information received over a network may be displayed without disturbing image contents during a slideshow of the image contents.

The other operations of the controller 170 will be explained below in detail with reference to FIGS. 2A to 6C.

FIGS. 2A to 2C are views provided to explain a screen conversion effect in accordance with the received weather forecast information, according to an exemplary embodiment.

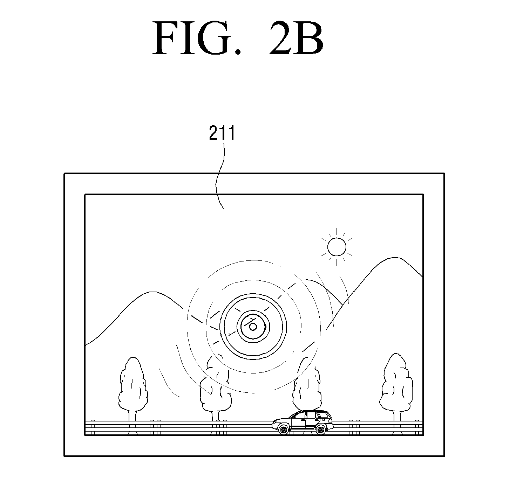

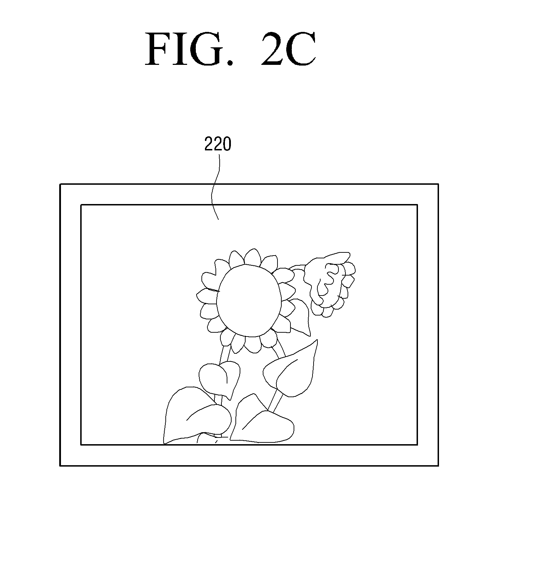

Referring to FIGS. 2A and 2C, when a slideshow is played back on the digital photo frame 100, a first screen 210 is converted into a second screen 220. The first screen 210 refers to a screen in which a first image content is displayed in a full screen, and the second screen 220 refers to a screen in which a second image content is displayed in a full screen. If the weather forecast information predicting rain is received through the communication unit 180, the controller 170 may control the display unit 150 to display the screen conversion effect as shown in FIG. 2B. Specifically, if the weather forecast information predicting rain is received through the communication unit 180, the controller 170 may control the display unit 150 to display a water drop image effect 211 on the first screen 210 while the first screen 210 is converted into the second screen 220. Then, the first screen 210 disappears while a water drop image is displayed on the first screen 210. Concurrently, the second screen 220 appears as shown in FIG. 2C.

While the above exemplary embodiment describes receiving the weather forecast information regarding rain, the exemplary embodiment may also be applicable when another weather forecast information is received. For example, if the weather forecast information predicting snow is received, the controller 170 may control the display unit 150 so that a snowball drop image is displayed on the first screen 210, the first screen 210 disappears, and then the second screen 220 appears. As another example, if the weather forecast information predicting typhoon is received, the controller 170 may control the display unit 150 so that a gust image is displayed on the first screen 210, the first screen 210 disappears, and then the second screen 220 appears.

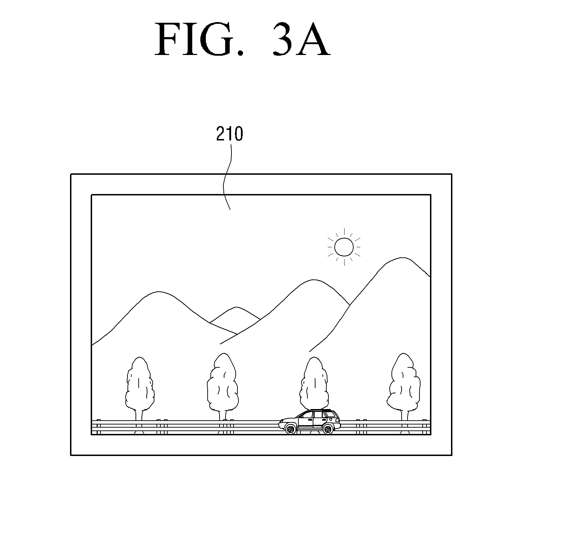

FIGS. 3A to 3C are views provided to explain a screen conversion effect in accordance with the received weather forecast information, according to another exemplary embodiment.

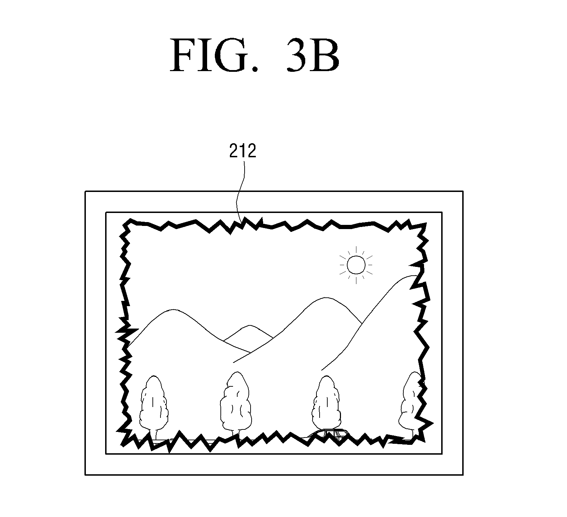

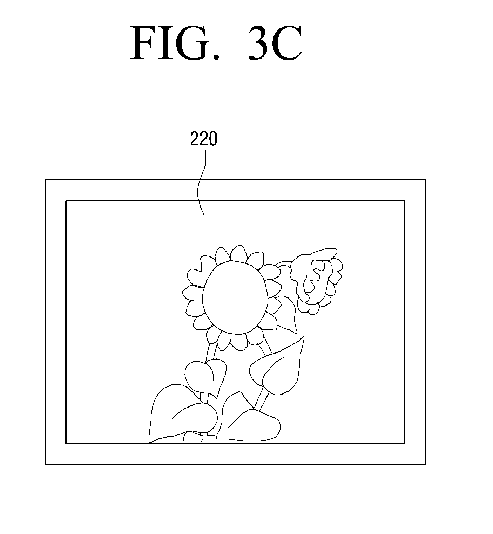

Referring to FIGS. 3A and 3B, when a slideshow is played back on the digital photo frame 100, the first screen 210 is converted into the second screen 220. If the weather forecast information which is received through the communication unit 180 includes the current temperature which exceeds a predetermined temperature, the controller 170 may control may control the display unit 150 to display the screen conversion effect as shown in FIG. 3B. To be specific, if the weather forecast information which is received through the communication unit 180 informs that the current temperature is exceeds a predetermined temperature, the controller 170 may control the display unit 150 to display an image burning effect 212 on the first screen 210 while the first screen 210 is converted into the second screen 220. The first screen 210 is burnt and disappears, and the second screen 220 appears as shown in FIG. 3C. In this case, the predetermined temperature may be set by a user.

In the above exemplary embodiment, the weather forecast information includes the current temperature which is higher than a predetermined temperature. However, even if the weather forecast information includes the current temperature which is lower than a predetermined temperature, the exemplary embodiment may also be applicable. If the weather forecast information in which the current temperature is lower than a predetermined temperature is received, a freezing image effect is displayed on the first screen 210, the first screen 210 disappears, and the second screen 220 appears.

As described above, the image effects 211, 212 corresponding to the weather forecast information are displayed while the first screen 210 is converted into the second screen 220. Therefore, a user may check weather forecast information and an esthetic effect may be achieved when a slideshow is played back.

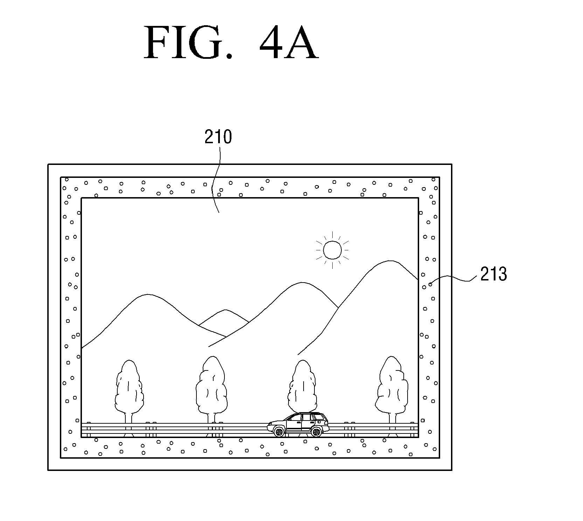

FIGS. 4A to 4B are views provided to explain a method for displaying an image effect corresponding to the received weather forecast information around an edge of a screen on which contents are being reproduced, according to an exemplary embodiment.

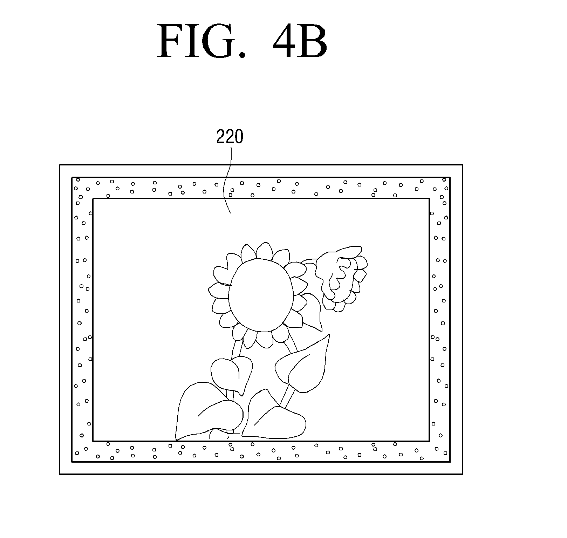

If the weather forecast information predicting snow is received through the communication unit 180, the controller 170 may control the display unit 150 to display a snow image effect 213 around an edge of the first screen 210 as shown in FIG. 4A. Herein, the edge may refer to an edge area of a screen on which contents are being played back. Alternatively, even if the first screen 210 is converted into the second screen 220, the controller 170 may control the display unit 150 to display the snow image effect also around the edge of the second screen 220 as shown in FIG. 4B. That is, if the weather forecast information predicting snow is received through the communication unit 180, the controller 170 may control the display unit 150 to constantly display the snow image effect around the edge of the screen despite the screen conversion.

The image effect is displayed around the edge of the screen in the above exemplary embodiment, but this is merely an exemplary embodiment. Alternatively, the technical aspects of the exemplary embodiment may be applied even if the image effect is displayed on other areas of the screen. For example, the controller 170 may control the image effect to be displayed on one of an upper area, a lower area, or side areas.

The image effect is displayed around the edge of the screen according to the weather forecast information predicting snow in the above exemplary embodiment, but this is merely an exemplary embodiment. Alternatively, the technical aspects of the exemplary embodiment may be applied when the image effect is displayed around the edge of the screen according to other weather forecast information. For instance, if the weather forecast information predicting rain is received, the controller 170 may control the rain image effect to be displayed around the edge of the screen. If the weather forecast informing that the current temperature exceeds a predetermined temperature is received, the controller 170 may control the display unit 150 to keep displaying the burning image effect on the edge of the screen.

According to the above exemplary embodiment, the image effect corresponding to the received weather forecast information is displayed only on the specific area of the screen. Therefore, the weather forecast information which is received over a network may be displayed without disturbing the image contents which are being displayed in a slideshow format.

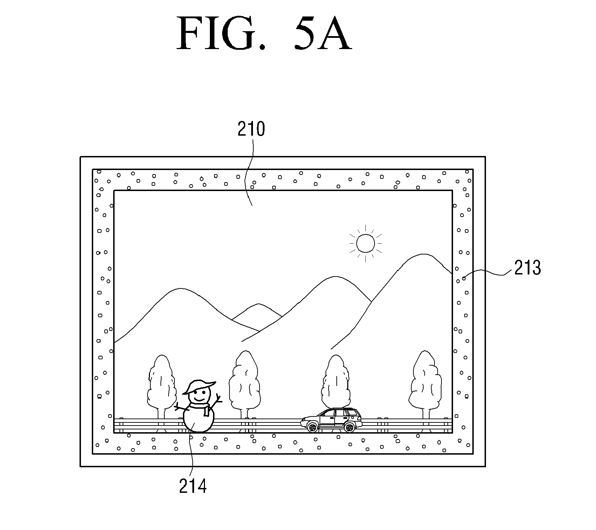

FIGS. 5A to 5C are views provided to explain a method for displaying a GUI on a screen on which contents are being reproduced, according to an exemplary embodiment.

As described above with reference to FIGS. 4A and 4B, if the weather forecast information predicting snow is received over a network, the controller 170 may control the display unit 150 to display the snow image effect 213 around the edges of the first and the second screens 210 and 220.

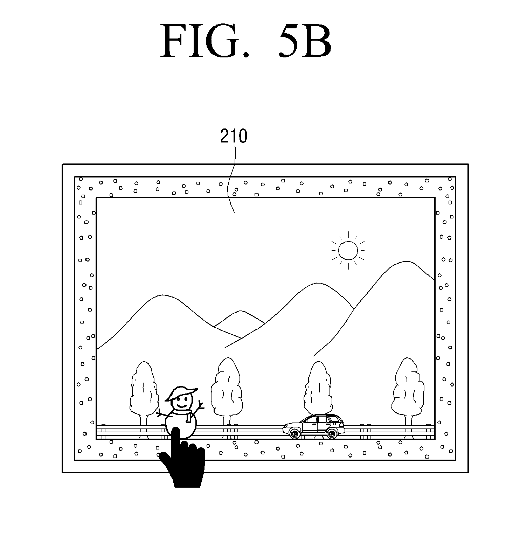

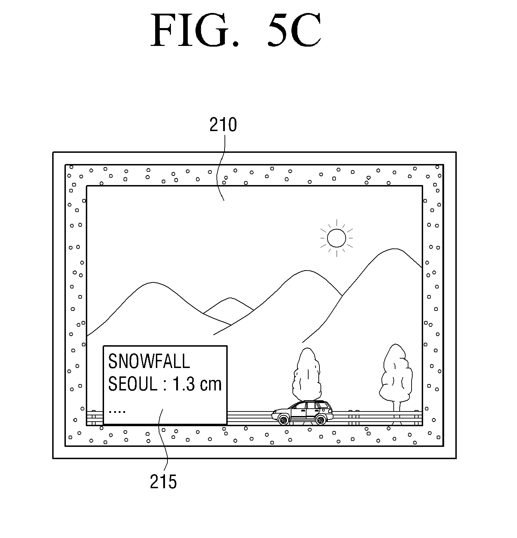

As shown in FIG. 5A, if the weather forecast information predicting snow is received over a network, the controller 170 may control the GUI generator 140 to generate and display a snowman-GUI 214. As shown in FIG. 5B, if the snowman-GUI 214 is selected by a user manipulation, the controller 170 may control the display unit 150 to display detailed weather forecast information which is received over a network. Specifically, if the snowman-GUI 214 is selected by a user manipulation, weather forecast information 215 regarding the amount of snowfall for each city and time may be displayed under the control of the controller 170 as shown in FIG. 5C. The weather forecast information 215 regarding the amount of snowfall for each city and time may disappear by a user manipulation or automatically disappear after a predetermined time elapses.

The snowman-GUI 214 is generated to correspond to the weather forecast information predicting snow in the above exemplary embodiment, but this is merely an exemplary embodiment. Alternatively, the technical aspects of the exemplary embodiment may be applied to generate the GUIs corresponding to the other weather forecast information. For instance, if the weather forecast information predicting rain is received, the controller 170 may control the GUI generator 140 to generate an umbrella-GUI. If the umbrella-GUI is selected, the controller 170 may control the display unit 150 to display weather forecast information regarding the amount of rainfall for each city and time.

According to the above exemplary embodiment, a user may obtain more detailed weather forecast by selecting the GUI which is generated according to the weather forecast information.

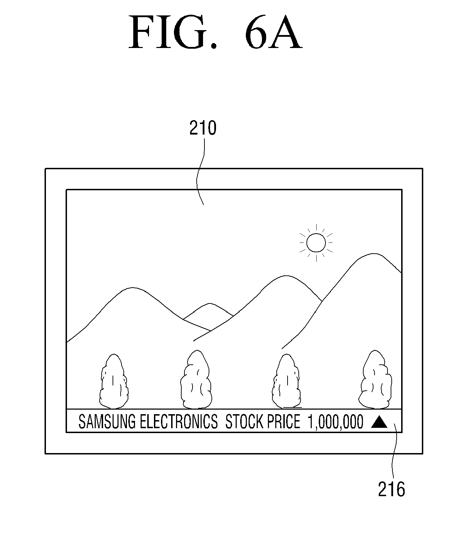

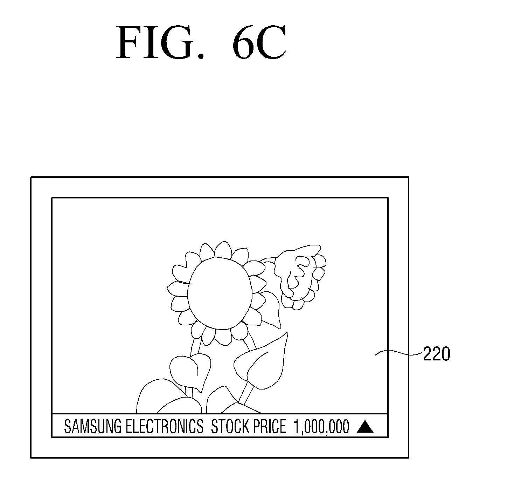

FIGS. 6A to 6C are views provided to explain a screen conversion effect in accordance with the received stock information, according to an exemplary embodiment.

Referring to FIGS. 6A to 6C, stock information 216 which is received over a network may be displayed on lower parts of the first screen 210 and the second screen 220 in a GUI format.

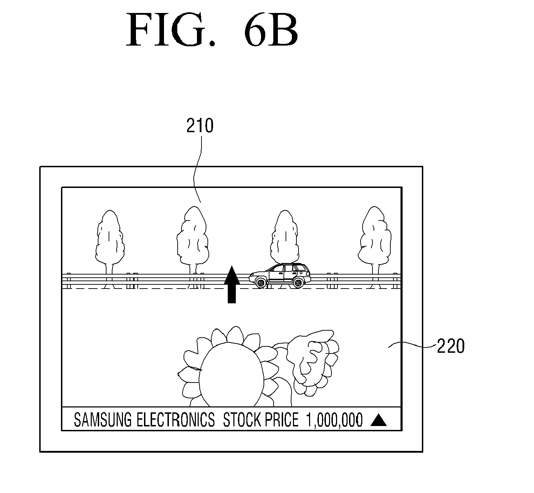

If the price of a hot stock rises according to the stock information received over a network, the controller 170 may control such that the first screen 210 is converted into the second screen 220 as shown in FIG. 6B. Specifically, if the stock information indicating that the price of the hot stock rises is received, the controller 170 may control the first screen 210 to be moved upward and gradually moved off the screen until it disappears, and , control the second screen 220 to be moved upward and gradually displayed until it is fully displayed on the screen. Accordingly, the images are scrolled upward or downward based on the most recent stock information.

According to the exemplary embodiment, the first screen 210 is converted into the second screen 220 by being moved upward, and thus a user may recognize intuitively that the price of the hot stock rises.

The image effect regarding the stock information in which the price of the hot stock rises is displayed in the above exemplary embodiment, but this is merely an exemplary embodiment. Alternatively, the technical aspects of the exemplary embodiment may be applied to display the image effect regarding the other stock information. For example, if the stock information indicating that the price of the hot stock falls is received, the controller 170 may control the first screen 210 to be moved downward and thus converted into the second screen 220.

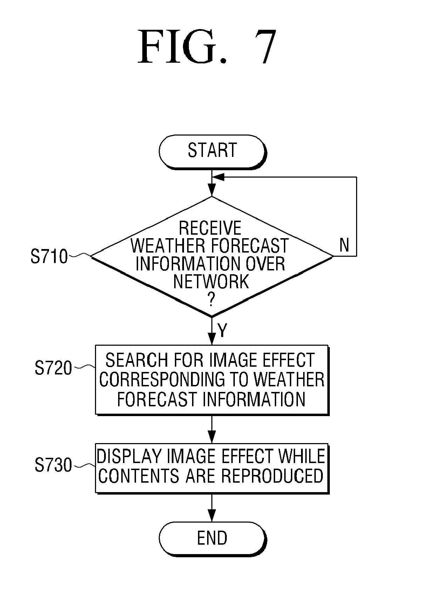

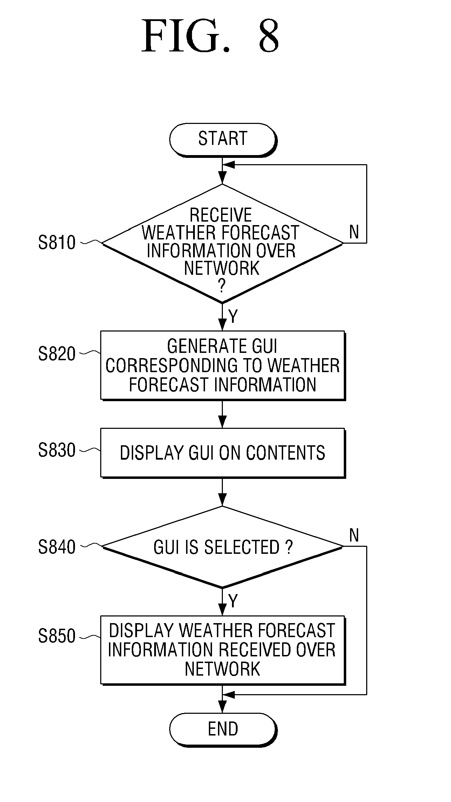

Hereinbelow, a method for reproducing contents according to an exemplary embodiment will be explained with reference to FIGS. 7 and 8.

FIG. 7 is a flowchart illustrating a method for reproducing contents in which a screen conversion effect is displayed corresponding to the received weather forecast information, according to an exemplary embodiment.

The digital photo frame 100 determines whether or not weather forecast information is received over a network (S71 0). If the weather forecast information is received over the network (S710-Y), the digital photo frame 100 searches for an image effect corresponding to the received weather forecast information among the stored image effects (S720). The digital photo frame 100 displays the searched image effect on a screen on which the contents are being reproduced (S730).

For example, if the weather forecast information predicting rain is received, the digital photo frame 100 may cause the first screen 210 to disappear with a water drop image effect and the second screen 220 to be displayed. In addition or alternatively, if the weather forecast information predicting rain is received, the digital photo frame 100 may cause a rain image effect to be displayed around an edge of a screen on which contents are being reproduced.

According to the above method, the image effect is applied according to the information received over a network. Accordingly, a user may visually recognize the received information through the image effect. In addition, as various effects are applied while contents are reproduced, a user may view more dramatic photos.

FIG. 8 is a flowchart provided to explain a method for reproducing contents in which a GUI corresponding to the received weather forecast information is generated and displayed, according to an exemplary embodiment.

The digital photo frame 100 determines whether or not weather forecast information is received over a network (S810). If the weather forecast information is received over the network (S810-Y), the digital photo frame 100 generates a GUI corresponding to the weather forecast information (S820). For example, if the weather forecast information predicts rain, the digital photo frame 100 may generate an umbrella-GUI, and if the weather forecast information predicts snow, the digital photo frame 100 may generate a snowman-GUI. The digital photo frame 100 displays a generated GUI on a screen on which contents are being reproduced (S830). In this situation, the screen on which the contents are reproduced may be a screen having a screen conversion effect or a screen having an image effect around an edge of the screen as described with reference to FIG. 7. The digital photo frame 100 determines whether or not the GUI is selected by a user manipulation (S840). If the GUI is selected (S840-Y), the digital photo frame 100 displays the weather forecast information which is received over the network (S850). For example, if the umbrella-GUI is selected, the digital photo frame 100 may display information regarding the amount of rainfall which is received over the network, and if the snowman-GUI is selected, the digital photo frame 100 may display information regarding the amount of snowfall which is received over the network.

Accordingly, the GUI which is generated according to the weather forecast information is selected and thus a user may recognize the weather forecast in more detail.

The display apparatus according to the exemplary embodiments is provided as the digital photo frame 100, but this is merely exemplary. The technical aspects of the exemplary embodiments may be applicable to any display apparatus which is capable of playing back a slideshow of contents. For example, the technical aspects of the exemplary embodiments may be applicable to a portable media player (PMP), a MPEG layer 3 (MP3) player, a television (TV), and so on.

As described above, according to the exemplary embodiments, an image effect is applied according to the information which is received over a network. Accordingly, a user may visually recognize the received information through the image effect. In addition, various effects are applied while contents are reproduced, thereby allowing a user to view more dramatic photos.

The foregoing exemplary embodiments and advantages are merely exemplary and are not to be construed as limiting the present general inventive concept. The present teaching can be readily applied to other types of apparatuses. Also, the description of the exemplary embodiments of the present general inventive concept is intended to be illustrative, and not to limit the scope of the claims, and many alternatives, modifications, and variations will be apparent to those skilled in the art.

## Claims

1. A method for reproducing contents of a display apparatus, the method comprising:
receiving specific information over a network; and
displaying contents to which an image effect corresponding to the received specific information is applied.

2. The method as claimed in claim 1, wherein the displaying the contents comprises:
displaying the contents with a screen conversion effect corresponding to the specific information while a first screen is converted into a second screen while the contents are reproduced.

3. The method as claimed in claim 2, wherein the specific information comprises weather forecast information; and
the displaying comprises displaying the contents with the screen conversion effect corresponding to the received weather forecast information when the first screen is converted into the second screen while the contents are reproduced.

4. The method as claimed in claim 2, wherein the specific information comprises stock information; and
the displaying comprises displaying the contents such that if a specific stock price rises, the first screen is converted into the second screen by moving the first and second screens upward until the first screen is no longer displayed and the second screen is fully displayed, and if a specific stock price falls, the first screen is converted into the second screen by moving the first and second screens downward until the first screen is no longer displayed and the second screen is fully displayed.

5. The method as claimed in one of claims 1 to 4, further comprising:
generating a graphical user interface (GUI) which corresponds to the received specific information; and
displaying the generated GUI along with the contents on a screen on which the contents are reproduced.

6. The method as claimed in claim 5, further comprising:
displaying, if the generated GUI is selected by a user manipulation, the specific information which is received over the network.

7. The method as claimed in one of claims 1 to 6, wherein the displaying comprises:
displaying the contents with the image effect corresponding to the received information, wherein the image effect is displayed around an edge of a screen on which the contents are reproduced.

8. The method as claimed in one of claims 1 to 7, wherein the display apparatus comprises a digital photo frame.

9. A display apparatus, comprising:
a communication unit which receives specific information over a network; and
a controller which controls contents to be displayed with an image effect corresponding to the received specific information on a screen on which the contents are reproduced.

10. The display apparatus as claimed in claim 9, wherein the controller controls the contents to be displayed with a screen conversion effect corresponding to the specific information while a first screen is converted into a second screen while the contents are reproduced.

11. The display apparatus as claimed in claim 10, wherein the specific information comprises weather forecast information; and
the controller controls the contents to be displayed with the screen conversion effect corresponding to the received weather forecast information when the first screen is converted into the second screen while the contents are reproduced.

12. The display apparatus as claimed in claim 10, wherein the specific information comprises stock information; and
the controller controls the contents to be displayed such that if a specific stock price rises, the first screen is converted into the second screen by moving the first and second screens upward until the first screen is no longer displayed and the second screen is fully displayed, and if a specific stock price falls, the first screen is converted into the second screen by moving the first and second screens downward until the first screen is no longer displayed and the second screen is fully displayed.

13. The display apparatus as claimed in one of claims 9 to 12, further comprising:
a GUI generator which generates a graphical user interface (GUI) corresponding to the received specific information;
wherein the controller controls the generated GUI to be displayed along with the contents on a screen on which the contents are reproduced.

14. The display apparatus as claimed in claim 13, wherein if the generated GUI is selected by a user manipulation, the controller controls the specific information which is received over the network to be displayed.

15. The display apparatus as claimed in one of claims 9 to 14, wherein the controller controls the contents to be displayed with the image effect corresponding to the received information, wherein the image effect is displayed around an edge of a screen on which the contents are reproduced.
